# EUROPÄISCHE PATENTSCHRIFT

(11) **EP 1 120 367 B1**
(45) Veröffentlichungstag und Bekanntmachung des Hinweises auf die Patenterteilung: **10.12.2003**
(21) Anmeldenummer: 01100539.4
(22) Anmeldetag: 10.01.2001
(51) Int. Cl.: B65G 17/24, B65G 39/20, B65G 47/26

(54) **Staurollenförderkette**
Accumulating roller conveyor chain
Chaîne de convoyeur accumulateur à rouleaux

(30) Priorität: 28.01.2000 DE 10003815; 25.02.2000 DE 10008926
(43) Veröffentlichungstag der Anmeldung: 01.08.2001
(73) Patentinhaber: Flexon GmbH, 57234 Wilnsdorf (DE)
(72) Erfinder: Janzen, Wolfgang, 57234 Wilnsdorf (DE); Nendel, Klaus, Prof. Dr.-Ing., 09569 Oederan (DE); Meynerts, Peter, Dipl.-Ing., 09224 Grüna (DE); Schönberg, Beata, Dipl.-Ing., 09130 Chemnitz (DE); Sumpf, Jens, Dr., 09366 Stolberg (DE)
(74) Vertreter: Langmaack, Jürgen, Dipl.-Ing.

(56) Entgegenhaltungen:
- DE-U- 9 206 960
- GB-A- 2 163 718
- US-A- 4 293 064
- US-A- 5 549 194

## Beschreibung

Für den Transport von Formteilen, beispielsweise in Verbindung mit Zuführeinrichtungen im Bereich der Montagetechnik, aber auch in der Verpackungstechnik oder dergleichen, sind sogenannte Staurollenförderketten vorgesehen. Derartige Staurollenförderketten sind nach dem Prinzip der Laschenkette aufgebaut, wobei in gleichmäßigen Abständen in jeweils auf den die Laschen verbindenden Gelenkbolzen zwischen den Laschen eine Tragrolle frei drehbar gelagert ist. Auf den nach außen verlängerten Gelenkbolzen sind Laufrollen gelagert, über die die Staurollenförderkette auf einer Führungsschiene abgestützt ist. Die Herstellung dieser vorbekannten Ketten erfordert einen hohen Montageaufwand.

Aus US-A-5,549,194 ist eine Staurollenförderkette bekannt, die in Laufrichtung gesehen, mit einer Vielzahl von aufeinanderfolgenden Lagergliedern für jeweils ein Staurollenpaar versehen ist, die dann jeweils mit Gelenkbolzen über einäußeres Zuglaschenpaar miteinander verbunden sind. Das Lagerglied besteht aus einem Mittelsteg, der an beiden Enden mit einer Gelenk- und Lagerhülse versehen ist, die zu beiden Seiten den Mittelsteg überragt. Auf einer der Gelenk- und Lagerhülsen ist zu beiden Seiten des Mittelsteges jeweils eine Tragrolle gelagert. Durch die Gelenk- und Lagerhülse ist ein verlängerter Gelenkbolzen durchgesteckt, auf dem jeweils eine Zuglasche des Zuglaschenpaares gelagert ist und auf dem jeweils am freien Ende eine Laufrolle drehbar gelagert ist. Durch die anderen Gelenk- und Lagerhülse dieses Mittelteils ist der Gelenkbolzen durchgesteckt, der mit dem nächstfolgenden Zuglaschenpaar verbunden ist.

Der Erfindung liegt die Aufgabe zugrunde, eine Staurollenförderkette zu schaffen, die in der Herstellung einfacher ist und die darüber hinaus gegenüber den bisher bekannten Ketten Gebrauchsvorteile besitzt.

Diese Aufgabe wird gelöst durch eine Staurollenförderkette mit einer Vielzahl von in Laufrichtung aufeinanderfolgenden Laschenblöcken aus einem Kunststoff, wobei jeder Laschenblock mit zwei parallelen Bohrungen versehen ist, in denen jeweils ein Gelenkbolzen aus Metall geführt ist, und mit einem Zuglaschenpaar aus Metall, das auf den beiden Außenseiten der Laschenblöcke jeweils mit den Gelenkbolzen der einander zugekehrten Enden zweier benachbarter Laschenblöcke verbunden ist, wobei jeder Laschenblock an einem Ende eine durchgehende Buchse zur Aufnahme eines ersten Gelenkbolzens aufweist, die stoffsc hlüssig mit zwei Seitenlaschen des Laschenblocks verbunden ist und wobei am anderen Ende die Seitenlaschen nach innen ragende Buchsenansätze zur Aufnahme eines zweiten Gelenkbolzens aufweisen, auf dem zwischen den Buchsenansätzen eine Tragrolle aus Kunststoff gelagert ist, und wobei ferner die beiden jeweils ein Zuglaschenpaar verbindenden Gelenkbolzen die Kette seitlich überragen und mit einem Gleitschuh verbunden sind. Eine derartige, in sogenannter Hybridbauweise ausgeführte Staurollenförderkette, bei der ein Teil der Bauelemente aus Kunststoff und ein Teil der Bauelemente aus Metall hergestellt ist, wobei jeweils einem Kunststoffteil ein Gegenlauf- bzw. Gleitpartner aus Metall zugeordnet ist, ist nicht nur einfach in der Montage, sondern weist auch gute Trockenlaufeigenschaften auf. Da eine Schmierung nicht erforderlich ist, kann eine derartige Staurollenförderkette auch im Bereich der Lebensmittel- und Verpackungsindustrie eingesetzt werden.

Die Gleitschuhe können symmetrisch zur Laufrichtung auf beiden Seiten angeordnet sein oder auch alternierend angeordnet sein. Hierbei sind die Gleitschuhe der einen Kettenseite gegenüber den Gleitschuhen der anderen Kettenseite versetzt angeordnet.

Besonders vorteilhaft ist es, wenn für die aus Kunststoff hergestellten Bauelemente ein mit Gleitmitteln modifizierter Kunststoff verwendet wird, zum Beispiel ein entsprechend eingestelltes POM, PBT oder PA. Hierdurch werden gute Trockenlaufeigenschaften, ein geräuscharmer Lauf sowie ein geringer Verschleiß erreicht. Durch die Konzeption des mit seiner durchgehenden Buchse und den damit stoffschlüssig verbundenen Seitenlaschen klauenartig ausgebildeten Laschenblocks wird auch die Montage vereinfacht. Die auf die überragenden Enden der Gelenkbolzen jeweils aufgesteckten Gleitschuhe ersetzen die bei den Staurollenförderketten nach dem Stand der Technik verwendeten Stützrollen. Der Werkstoff der Gleitschuhe ist auf den Werkstoff der Führungsschienen abzustimmen. Bei aus Stahl, vor allem bei aus Kunststoff, beispielsweise PE-UHM oder PA hergestellten Führungsschienen sind die Gleitschuhe zweckmäßigerweise aus einem widerstandsfähigen Kunststoff mit guten Gleiteigenschaften, wie beispielsweise POM, PBT oder PA, hergestellt. Hierdurch ergibt sich auch herstellungstechnisch eine erhebliche Vereinfachung. Die Gleitschuhe werden als Kunststofformteil hergestellt und können zu Montagezwekken auf die freien Enden der Gelenkbolzen mit Preßsitz oder in Form einer Schnappverbindung aufgesteckt werden. Sowohl bei einer symmetrischen als auch bei einer alternierenden Ausrichtung der Gelenkbolzen jeweils auf einer Kettenseite, ergibt sich ein hinreichender Abstand zwischen den auf jeder Seite der Staurollenförderkette angeordneten Gleitschuhen, so daß die Gleitschuhe gleichzeitig als Eingriffsmittel für die Zähne der zugehörigen Kettenräder dienen können.

In Ausgestaltung der Erfindung ist ferner vorgesehen, daß die Tragrolle jeweils mit einem eine Lagerbohrung aufweisenden Scheibenteil versehen ist, dessen Dicke in etwa dem lichten Abstand zwischen den beiden Buchsenansätzen an den Seitenlaschen des Lagerblocks entspricht. Dadurch ist für die Montage eine gute Fixierung gegeben und im Betrieb eine ausreichende seitliche Abstützung der Tragrolle gegenüber Belastungen durch Querkräfte.

In Ausgestaltung der Erfindung ist ferner vorgesehen, daß der Scheibenteil der Tragrolle mit einem Laufkranz versehen ist, dessen Breite in etwa dem lichten Abstand zwischen den beiden Seitenlaschen des Laschenblocks entspricht. Der Laufkranz übergreift somit die Buchsenansätze und bildet eine breitere Aufstandsfläche, so daß hier die Tragfähigkeit der Tragrollen verbessert wird.

In Ausgestaltung der Erfindung ist ferner vorgesehen, daß die Gleitschuhe jeweils Klemmbohrungen zur Aufnahme der die Kette seitlich überragenden freien Gelenkbolzenenden aufweist. Damit ist es möglich, die Gleitschuhe jeweils im Preßsitz auf die freien Gelenkbolzenenden aufzubringen. Hierbei ist es vorteilhaft, wenn insbesondere bei Gleitschuhen aus Kunststoff die Klemmbohrungen als Sackbohrungen ausgebildet und mit einer axialen Entlüftungsnut versehen sind. Dadurch wird beim Aufstecken die Bildung eines Luftpolsters in der Sackbohrung vermieden, so daß der Gleitschuh vollständig aufgepreßt werden kann.

In bevorzugter weiterer Ausgestaltung der Erfindung ist vorgesehen, daß der Gleitschuh mit einer Vertiefung zur Aufnahme der anliegenden Zuglasche versehen ist.

Die Erfindung wird anhand schematischer Zeichnungen von Ausführungsbeispielen näher erläutert, denen weitere Merkmale der Erfindung zu entnehmen sind Es zeigen:
- Fig. 1: eine Aufsicht auf eine erste Ausführungsform, einer Staurollenförderkette,
- Fig. 2: eine Seitenansicht der Staurollenförderkette gemäß Fig. 1,
- Fig. 3: einen Horizontalschnitt gemäß der Linie III-III in Fig. 2,
- Fig. 4: in perspektivischer Darstellung einen Laschenblock,
- Fig. 5: in perspektivischer Darstellung einen Gleitschuh,
- Fig. 6: ein Kettenrad zum Antrieb der in Fig. 1 dargestellten Staurollenförderkette,
- Fig. 7: eine perspektivische Ansicht einer zweiten Ausführungsform der Staurollenförderkette,
- Fig. 8: eine perspektivische Ansicht des Laschenblocks für die Ausführungsform gem. Fig. 7,
- Fig. 9: in einem Vertikalschnitt gem. der Linie IX-IX in Fig. 5 eine Ausgestaltung für einen Gleitschuh als Befestigungselement für einen Gelenkbolzen,
- Fig. 10: einen Gelenkbolzen für eine Verbindung mit Gleitschuhen entsprechend Fig. 9,
- Fig. 11: eine Abwandlung des in Fig. 8 dargestellten Laschenblocks, teilweise im Schnitt,
- Fig. 12: eine Seitenansicht einer abgewandelten Tragrolle,
- Fig. 13: einen Schnitt gem. der Linie XIII-XIII in Fig. 12.

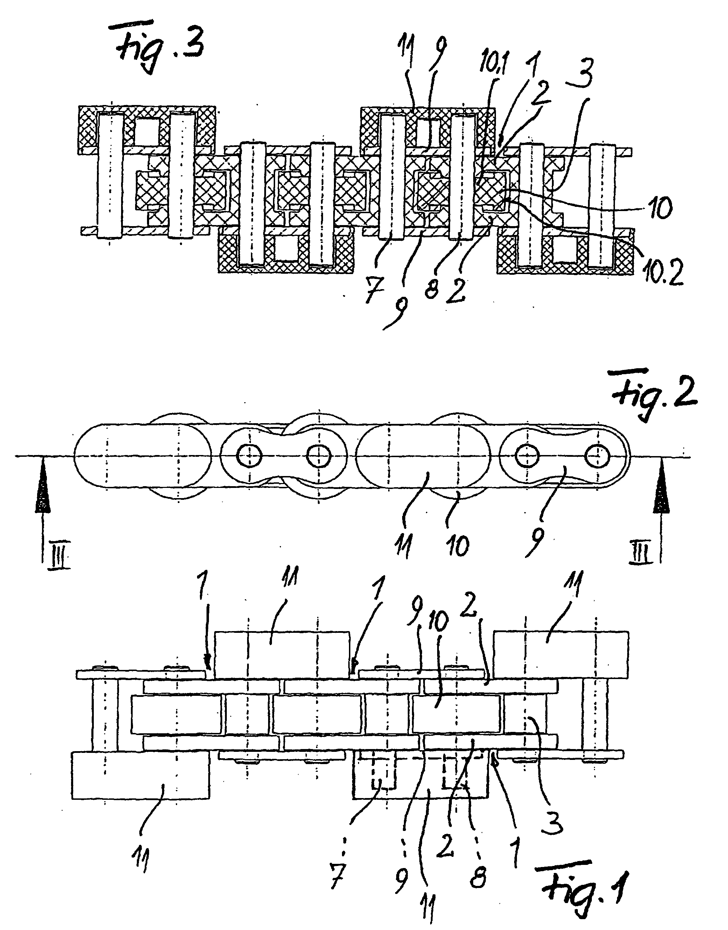

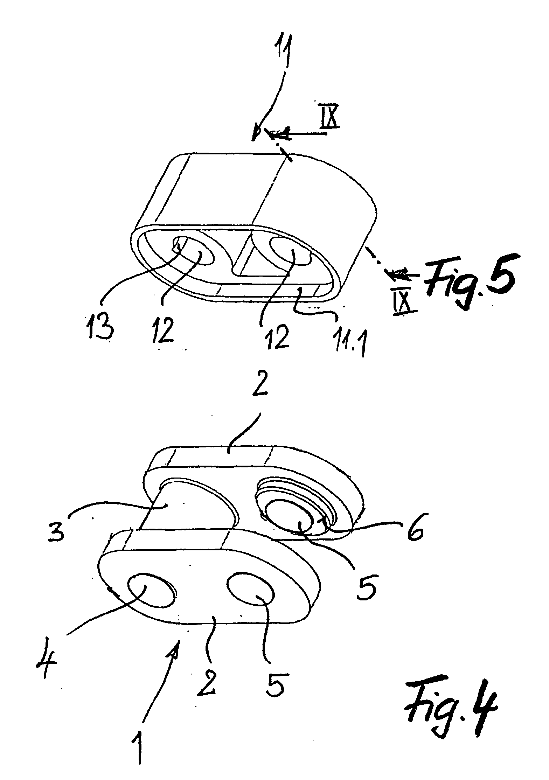

Wie aus Fig. 1 in Verbindung mit Fig. 3 und Fig. 4 zu ersehen, wird die Staurollenförderkette im wesentlichen gebildet durch aufeinanderfolgende Laschenblöcke 1, die aus einem mechanisch hochfesten und gleitfähigen Kunststoff hergestellt sind. Ein Laschenblock wird durch zwei Seitenlaschen 2 gebildet, die an einem Ende über eine durchgehende Buchse 3 stoffschlüssig miteinander verbunden sind. Die Buchse 3 ist mit einer Bohrung 4 zur Aufnahme eines ersten Gelenkbolzens 7 versehen. An ihren freien Enden sind die Seitenlaschen 2 ebenfalls mit Durchgangslöchern 5 zur Aufnahme eines zweiten Gelenkbolzens 8 versehen. Auf der Innenseite der beiden Seitenlaschen sind der Bohrung 5 jeweils ein Buchsenansatz 6 zugeordnet. Die Bohrungen 4 und 5 sind so bemessen, daß die Gelenkbolzen 7 und 8 drehbar gehalten sind.

Auf beiden Außenseiten der Laschenblöcke 1 ist jeweils ein Zuglaschenpaar 9 aus Stahl angeordnet, das jeweils mit den Gelenkbolzen 7, 8 der einander zugekehrten Enden zweier benachbarter Laschenblöcke 1 verbunden ist.

Auf dem zweiten Gelenkbolzen 8 ist dann zwischen den Seitenlaschen 2 jeweils eine Tragrolle 10 frei drehbar gelagert, deren Durchmesser so gewählt ist, daß sie die aus Laschenblöcken 1 und den Zuglaschenpaaren 9 gebildete Kette auf der Ober- und der Unterseite jeweils überragt.

Die jeweils ein Zuglaschenpaar 9 miteinander verbindenden Gelenkbolzen 7, 8 sind nun so bemessen und so mit den Zuglaschen verbunden, daß sie mit ihren freien Enden jeweils alternierend die Kette seitlich überragen. Auf diese freien Enden ist ein Gleitschuh 11 aus Kunststoff, beispielsweise POM, PBT mit PTFE modifiziert, aufgesteckt. Über die Gleitschuhe 11 stützt sich die Staurollenförderkette auf einer entsprechend ausgebildeten Führungsschiene ab, die beispielsweise einen U-förmigen Querschnitt aufweist, so daß die Laufrollen 10, auf denen die zu transportierenden Formteile aufliegen, bei einem Förderstau frei drehen können und so die Staurollenförderkette unter dem stehenden Transportgut weiterhin durchgezogen werden kann.

Wie aus der Schnittdarstellung gemäß Fig. 3 ersichtlich, weisen die Tragrollen 10 einen Scheibenteil 10.1 auf, dessen Dicke in etwa dem lichten Abstand zwischen den beiden Buchsenansätzen 6 an den Seitenlaschen 2 entspricht, so daß die Tragrolle 10 seitlich abgestützt ist. Der Scheibenteil 10.1 der Tragrolle ist ferner mit einem Laufkranz 10.2 versehen, dessen Breite in etwa dem lichten Abstand zwischen den beiden Seitenlaschen 2 des Laschenblocks entspricht, so daß sich für das Transportgut eine breite Aufstandsfläche ergibt und nur geringe Spaltweiten vorhanden sind.

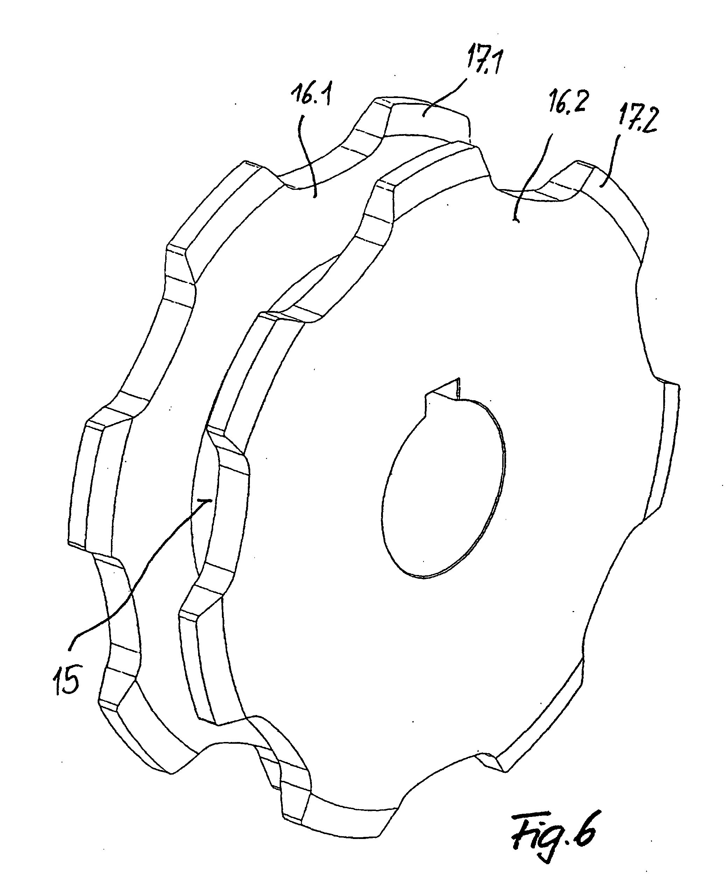

Wie aus Fig. 5 ersichtlich, weist der Gleitschuh 11 zwei Sackbohrungen 12 auf, deren Durchmesser so bemessen ist, daß der Gleitschuh 11 auf die freien Enden der beiden Gelenkbolzen 7 und 8 im Preßsitz aufgeschoben werden kann. Damit die im Sackloch 12 eingeschlossene Luft beim Aufschieben entweichen kann, ist die Wandung jeder Sackbohrung mit einer axialen Entlüftungsnut 13 versehen.

Durch die alternierende Anordnung der Gleitschuhe 11 entstehen zu beiden Seiten der Kette, jedoch versetzt zueinander, entsprechende Freiräume 14, in die dann die Zähne eines Kettenrades eingreifen können. Ein derartiges Kettenrad ist in Fig. 6 dargestellt. Wie die Zeichnung erkennen läßt, weist das dargestellte Kettenrad zwei über eine Nabe 15 fest miteinander verbundene Scheibenkörper 16.1 und 16.2 auf, die auf ihrem Außenumfang mit Zähnen 17.1 und 17.2 mit gleicher Teilung versehen sind. Die Teilung der Zähne 17 ist den lichten Abstand der Gleitschuhe 11 an der Kette vorgegeben. Entsprechend der alternierenden Anordnung der Gleitschuhe 11 an der Kette sind die beiden Scheibenkörper 16.1 und 16.2 in bezug auf die Zahnteilung versetzt zueinander angeordnet.

Das vorstehend beschriebene Ausführungsbeispiel stellt eine geradlaufende Staurollenförderkette dar. Bei einer kurvengängigen Ausführungsform muß die Bohrung 4 in der durchgehenden Buchse 3 eines jeden Laschenkörpers 1 so ausgeführt werden, daß sich der Durchmesser der Bohrung 4 von der Mitte ausgehend zu beiden Seiten hin erweitert. Entsprechend muß auch der Laschenkörper 1 in diesem Bereich eine nach außen aufgewölbte, die Außenflächen der Seitenlaschen 2 überragende Aufwölbung aufweisen. Die senkrecht zur Achse der Gelenkbolzen verlaufenden Außenflächen der Gleitschuhe 11 müssen entsprechend konvex gekrümmt sein, so daß sich die Kette mit den Außenflächen ihrer Gleitschuhe 11 an einer entsprechenden Führungsfläche der Führungsschiene abstützen kann.

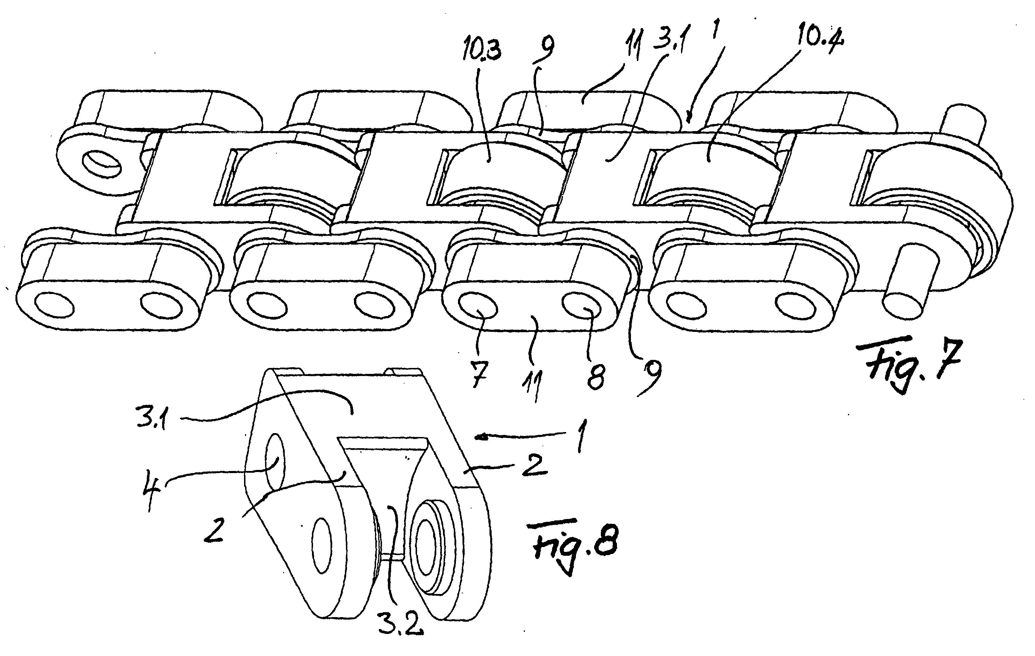

Die in Fig. 7 dargestellte Ausführungsform der erfindungsgemäßen Staurollenkette entspricht im Grundaufbau der zuvor beschriebenen Ausführungsform, so daß auf die vorstehende Beschreibung verwiesen wird. Gleiche Bauteile sind mit gleichen Bezugszeichen versehen.

Die Abwandlung besteht zum einen darin, daß die Gleitschuhe 11, bezogen auf die Längsrichtung, symmetrisch angeordnet sind. Hierzu sind alle Gelenkbolzen 7, 8 auf beiden Seiten verlängert ausgegbildet, so daß von beiden Seiten Gleitschuhe 11 aufgesteckt sind, die die Zuglaschen 9 jeweils überdecken.

Die perspektivische Ansicht eines Laschenblocks 1 in Fig. 8 läßt die Abwandlung gegenüber der Ausführungsform gem. Fig. 4 erkennen. Anstelle einer Buchse 3 ist ein blockförmiger Quersteg 3.1 vorgesehen, in dem die Bohrungen 4 angeordnet sind. Der Quersteg 3.1 reicht einenends bis dicht an die benachbarte Tragrolle 10.3 (vgl. Fig. 7) heran, wobei genügend Freiraum für eine Abwinklung der Laschenblöcke gegeneinander vorhanden sein muß. An seinem den Seitenlaschen 2 zugekehrten Ende ist die Vorderfläche 3.2 des Querstegs 3.1 zylinderförmig ausgebildet, so daß sie die zugeordnete Tragrolle 10.4 mit geringem Abstand umgreift, so daß nur ein geringer Spaltabstand gegeben ist. Durch die praktisch geschlossene Oberfläche wird das Einklemmen auch von kleineren Teilen in der Kette verhindert.

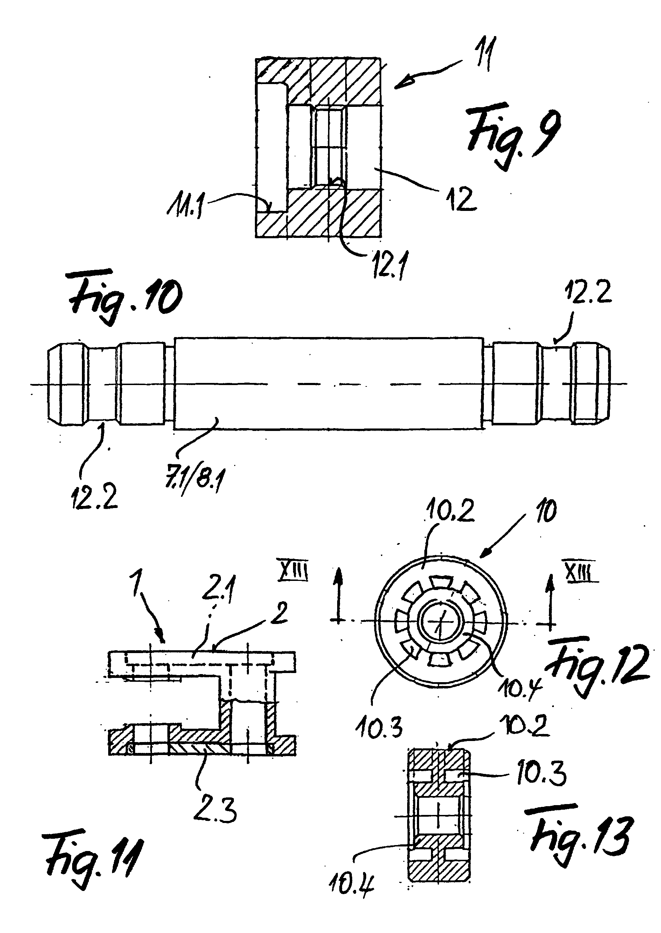

In Fig. 9 ist in einem Schnitt gem. der Linie IX-IX in Fig. 5 eine Seitenlasche 11 dargestellt, wie sie in Verbindung mit dem in Fig. 10 in entsprechendem Maßstab dargestellten Gelenkbolzen 7.1 bzw. 8.1 verwendet wird.

Der aus Kunststoff gefertigte Gleitschuh 11, der mit einer sich über beiden Bohrungen 12 erstreckenden Ausnehmung 11.1 zur Aufnahme einer Zuglasche 9 versehen ist, dient gleichzeitig als Befestigungsmittel für den durchzusteckenden Gelenkbolzen 7.1 bzw. 8.1. Hierzu ist die Bohrung 12 in entsprechendem Abstand mit einem nach innen ragenden stegförmiger Ansatz 12.1 versehen.

Wie aus Fig. 10 ersichtlich, weist der zugeordnete Gelenkbolzen 7.1 bzw. 8.1 im Bereich seiner beiden Enden eine umlaufende Nut 12.2 auf. Wird nun der Gleitschuh 11 auf die zugeordneten Gelenkbolzen aufgeschoben, dann rastet der stegförmige Ansatz 12.1 des Gleitschuhs entsprechend in die Nut 12.2 des Gelenkbolzens 7.1/8.1 ein. Mit einer derartigen Ausgestaltung der Bohrungen 12 der Gleitschuhe 11 einerseits und der Enden der Gelenkbolzen 7.1/8.1 andererseits, können die Gelenkbolzen bei der Montage der Kette in Form einer Schnappverbindung fixiert werden, so daß eine einfache maschinelle Fügetechnik möglich wird.

Zur Erhöhung der Zugfestigkeit ist es vorteilhaft, wenn der Laschenblock 1, wie in der Schnittdarstellung gem. Fig. 11 dargestellt, auf der Außenfläche seiner Seitenlaschen 2 mit entsprechenden Vertiefungen 2.1 versehen ist, in die zusätzliche, mit Bohrungen versehene Zuglaschen 2.3 aus Metall eingelegt werden können, die ebenfalls von der Gelenkbolzen 7 und 8 bzw. 7.1 und 8.1 durchsetzt sind. Mit einer derartigen Ausführungsform kann die zulässige Zugbelastung einer derartigen Staurollenförderkette wesentlich erhöht werden, da die Zugbelastung in vollem Umfang über die jeweils benachbarte Laschenblöcke 1 aus Kunststoff verbindenden Zuglaschen 9 aus Metall sowie die metallischen Gelenkbolzen 7/8 und die in die Laschenblöcke 1 eingelegte metallischen Zuglaschen 2.3 übertragen wird. Damit ist es möglich, eine derartige Kette hinsichtlich ihrer Zugbelastung ausschließlich über die Dimensionierung der metallischen Elemente, nämlich der Zuglaschen 9 und 2.3 sowie der Gelenkbolzen 7/8 zu konzipieren, während für die Tragfähigkeit in bezug auf die Auflast die aus Kunststoff gefertigten Teile, hier insbesondere die Tragrollen, aber auch die Laschenkörper und die Gleitschuhe zu dimensionieren sind. Damit ergibt sich bei hoher Zugfestigkeit einer derartigen Staurollenförderkette gleichwohl ein geringes Metergewicht und damit eine deutliche Reduzierung der zu bewegenden Masse gegenüber Ganzmetall-Staurollenförderketten.

In Fig. 12 (Aufsicht) und Fig. 13 (Schnitt) ist eine abgewandelte Ausführungsform für die Tragrollen 10 dargestellt. Hierbei ist der Scheibenteil auf wenigstens einer Seite, zweckmäßig auf beiden Seiten mit mehreren, gleichmäßig auf den Umfang verteilten Vertiefungen 10.3 versehen, so daß sich die aus Fig. 12 ersichtliche Speichenstruktur zwischen einem Nabenteil 10.4 und dem Laufkranz 10.2 ergibt. Hierdurch wird neben einer Materialersparnis, die zugleich zu einer Gewichtsverminderung führt auch eine gewisse Federungseigenschaft der Tragrolle in radialer Richtung bewirkt.

Die Ausnehmungen 10.3 können auch so ausgebildet werden, daß sie jeweils abwechselnd zur einen und zur anderen Seitenfläche hin offen sind, wobei sie dann sich durch den Scheibenteil jeweils über die Mittelebene der Tragrolle hinaus erstrecken.

## Patentansprüche

1. Staurollenförderkette mit einer Vielzahl von in Laufrichtung aufeinanderfolgenden Laschenblöcken (1) aus einem Kunststoff, wobei jeder Laschenblock (1) mit zwei parallelen Bohrungen (4, 5) versehen ist, in denen jeweils ein Gelenkbolzen (7, 8) aus Metall geführt ist, und mit einem Zuglaschenpaar (9) aus Metall, das auf den beiden Außenseiten der Laschenblöcke (1) jeweils mit den Gelenkbolzen (7, 8) der einander zugekehrten Enden zweier benachbarter Laschenblöcke (1) verbunden ist, wobei jeder Laschenblock (1) an einem Ende eine durchgehende Buchse (3) zur Aufnahme eines ersten Gelenkbolzens (7) aufweist, **dadurch gekennzeichnet, dass** die Buchse (3) stoffschlüssig mit zwei Seitenlaschen (2) des Laschenblocks (1) verbunden ist, am anderen Ende jedes Laschenblocks (1) die Seitenlaschen (2) nach innen ragende Buchsenansätze (6) zur Aufnahme des zweiten Gelenkbolzens (8) aufweisen, auf dem zwischen den Buchsenansätzen (6) eine Tragrolle (10) aus Kunststoff gelagert ist, und ferner die beiden jeweils ein Zuglaschenpaar (9) verbindenden Gelenkbolzen (7, 8) die Kette seitlich überragen und mit einem Gleitschuh (11) verbunden sind.

2. Staurollenförderkette nach Anspruch 1, **dadurch gekennzeichnet, daß** die Gelenkbolzen (7, 8) die Kette alternierend seitlich überragen.

3. Staurollenförderkette nach Anspruch 1 oder 2, **dadurch gekennzeichnet, daß** die Tragrollen (10) jeweils mit einem eine Lagerbohrung aufweisenden Scheibenteil (10.1) versehen ist, dessen Dicke in etwa dem lichten Abstand zwischen den beiden Buchsenansätzen (6)' an den Seitenlaschen (2) des Laschenblocks (1) entspricht.

4. Staurollenförderkette nach Anspruch 3, **dadurch gekennzeichnet, daß** der Scheibenteil (10.1) der Tragrolle (10) mit einem Laufkranz (10.2) versehen ist, dessen Breite in etwa dem lichten Abstand zwischen den beiden Seitenlaschen (2) des Lagerblocks (1) entspricht.

5. Staurollenförderkette nach Anspruch 3 oder 4, **dadurch gekennzeichnet, daß** der Scheibenteil (10.1) der Tragrolle (10) jeweils mit Vertiefungen (10.3) versehen ist.

6. Staurollenförderkette nach einem der Ansprüche 1 bis 5, **dadurch gekennzeichnet, daß** die Gleitschuhe (11) jeweils Klemmbohrungen (12) zur Aufnahme der die Kette seitlich überragenden ***freien Gelenkbolzenenden aufweist.***

7. Staurollenförderkette nach Anspruch 6, **dadurch gekennzeichnet, daß** die Klemmbohrungen (12) der Gleitschuhe (11) jeweils mit einem radial nach innen ragenden stegförmigen Ansatz (12.1) versehen sind, dem an den freien Enden der Gelenkbolzen (7.1/8.1) eine umlaufende Nut (12.2) zugeordnet ist, die in Verbindung mit dem stegförmigen Ansatz (12.1) eine Schnappverbindung bildet.

8. Staurollenförderkette nach Anspruch 6, **dadurch gekennzeichnet, daß** die Klemmbohrungen (12) als Sackbohrungen ausgebildet sind und mit einer axialen Entlüftungsnut (13) versehen sind.

9. Staurollenförderkette nach einem der Ansprüche 1 bis 8, **dadurch gekennzeichnet, daß** die Gleitschuhe (11) mit einer Vertiefung (11.1) zur Aufnahme der jeweils anliegenden Zuglasche (9) versehen ist.

10. Staurollenförderkette nach einem der Ansprüche 1 bis 9, **dadurch gekennzeichnet, daß** die Seitenlaschen (2) eines Laschenblocks (1) über einen blockförmigen Quersteg (3.1) stoffschlüssig miteinander verbunden sind und daß die der zugehörigen Tragrolle (10) zugekehrte Vorderfläche (3.2) des Querstegs(3.1) die Tragrolle in geringem Abstand umgreift.

11. Staurollenförderkette nach einem der Ansprüche 1 bis 10, **dadurch gekennzeichnet, daß** die Seitenlaschen (2) eines Laschenblocks (1) mit einer Vertiefung (2.1) zur Aufnahme einer verstärkenden Zuglasche (2.3) versehen ist.

## Claims

1. Accumulating conveyor chain provided with a multitude of plate blocks (1) made of plastic, which are arranged successively in running direction, whereby each plate block (1) has two parallel drill holes (4, 5), each of which is fitted with one hinge bolt (7, 8) made of metal, and provided with one pair of draw plates (9) made of metal, which is on each of the two exterior sides of the plate blocks (1) linked with the hinge bolts (7, 8) of the ends facing each other of two adjacent plate blocks (1), whereby each plate block (1) has at one end a throughgoing bush (3) to receive a first hinge bolt (7), **characterised in that** the bush (3) is bonded firmly with two side plates (2) of the plate block (1), at the other end of each plate block (1) the side plates (2) have inward-looking bush extensions (6) to receive the second hinge bolt (8), onto which a support roller (10) made of plastic, is placed between the bush extensions (6), and furthermore, the two hinge bolts (7, 8) each connecting one pair of draw plates (9) protrude from the chain laterally and are linked with a guide shoe (11).

2. Accumulating conveyor chain according to claim 1, **characterised in that** the hinge bolts (7, 8) protrude from the chain laterally in an alternating manner.

3. Accumulating conveyor chain according to claim 1 or 2, **characterised in that** each of the carrying rollers (10) is provided with a disk part (10.1), which has a bore of the bearing and a thickness that approximately corresponds to the clear distance between the two bush extensions (6) at the side plates (2) of the plate block (1).

4. Accumulating conveyor chain according to claim 3, **characterised in that** the disk part (10.1) of the support roller (10) is provided with a running tread (10.2) with a breadth that approximately corresponds to the clear distance between the two side plates (2) of the plate block (1).

5. Accumulating conveyor chain according to claim 3 or 4, **characterised in that** each of the disk parts (10.1) of the support roller (10) shows impressions (10.3).

6. Accumulating conveyor chain according to one of the claims 1 to 5, **characterised in that** each of the guide shoes (11) shows clamp bores (12) to receive the free ends of the hinge bolts protruding from the chain laterally.

7. Accumulating conveyor chain according to claim 6, **characterised in that** each of the clamp bores (12) of the guide shoes (11) shows a radially inward-looking, web-shaped appendage (12.1) that is at the free ends of the hinge bolts (7.1/8.1) fitted with a peripheral groove (12.2), which in combination with the web-shaped appendage (12.1) forms a snap connection.

8. Accumulating conveyor chain according to claim 6, **characterised in that** the clamp bores (12) are designed as tapped blind holes and provided with an axial ventilation groove (13).

9. Accumulating conveyor chain according to one of the claims 1 to 8, **characterised in that** the guide shoes (11) are provided with an impression (11.1) to receive each adjacent draw plate (9).

10. Accumulating conveyor chain according to one of the claims 1 to 9, **characterised in that** the side plates (2) of a plate block (1) are bonded firmly with each other via a block-shaped cross web (3.1) and that the front face (3.2) of the cross web (3.1) facing the corresponding support roller (10) encompasses the support roller at a slight distance.

11. Accumulating conveyor chain according to one of the claims 1 to 10, **characterised in that** the side plates (2) of a plate block (1) are provided with an impression (2.1) to receive a reinforcing draw plate (2.3).

## Revendications

1. Chaîne de convoyeur accumulateur à rouleaux comportant une pluralité de blocs à plaquettes (1) en une matière synthétique, se succédant dans le sens du déplacement, chaque bloc à plaquettes (1) étant pourvu de deux perçages (4, 5) parallèles dans lesquels est chaque fois conduit un goujon d'articulation (7, 8) en métal, et comportant une paire de plaquettes de traction (9) en métal qui, sur les deux côtés extérieurs des blocs à plaquettes (1), est reliée chaque fois aux goujons d'articulation (7, 8) des extrémités dirigées l'une vers l'autre de deux blocs à plaquettes (1) avoisinants, chaque bloc à plaquettes (1) présentant sur une extrémité une douille traversante (3) pour la réception d'un premier goujon d'articulation (7), **caractérisée en ce que** la douille (3) est raccordée d'un seul tenant à deux plaquettes latérales (2) du bloc à plaquettes (1), les plaquettes latérales (2) présentent sur l'autre extrémité de chaque bloc à plaquettes (1) des éléments de douilles (6) dépassant vers l'intérieur pour la réception du deuxième goujon d'articulation (8), sur lequel, entre les éléments de douilles (6), est logé un rouleau porteur (10) en matière synthétique et, en outre, les deux goujons d'articulation (7, 8) reliant chaque fois une paire de plaquettes de traction (9) dépassent latéralement de la chaîne et sont pourvus d'un patin de guidage (11).

2. Chaîne de convoyeur accumulateur à rouleaux selon la revendication 1, **caractérisée en ce que** les goujons d'articulation (7, 8) dépassent latéralement de la chaîne en alternance.

3. Chaîne de convoyeur accumulateur à rouleaux selon la revendication 1 ou 2, **caractérisée en ce que** les rouleaux porteurs (10) sont pourvus chaque fois d'une pièce en plaque (10.1) présentant un perçage de palier, l'épaisseur de ladite pièce correspondant sensiblement à l'écartement intérieur entre les deux éléments de douilles (6) sur les plaquettes latérales (2) du bloc à plaquettes (1).

4. Chaîne de convoyeur accumulateur à rouleaux selon la revendication 3, **caractérisée en ce que** la pièce en plaque (10.1) du rouleau porteur (10) est pourvue d'une couronne de roulement (10.2) dont la largeur correspond sensiblement à l'écartement intérieur entre les deux plaquettes latérales (2) du bloc à plaquettes (1).

5. Chaîne de convoyeur accumulateur à rouleaux selon la revendication 3 ou 4, **caractérisée en ce que** la pièce en plaque (10.1) du rouleau porteur (10) est chaque fois pourvue de creux (10.3).

6. Chaîne de convoyeur accumulateur à rouleaux selon l'une quelconque des revendications 1 à 5, **caractérisée en ce que** le patin de guidage (11) présente chaque fois des perçages de coinçage (12) pour la réception des extrémités libres de goujons d'articulation dépassant latéralement de la chaîne.

7. Chaîne de convoyeur accumulateur à rouleaux selon la revendication 6, **caractérisée en ce que** les perçages de coinçage (12) des patins de guidage (11) sont chaque fois pourvus d'une saillie en forme d'entretoise (12.1) dépassant radialement vers l'intérieur, à laquelle, aux extrémités libres des goujons d'articulation (7.1 / 8.1), une rainure entourante (12.2) est affectée qui, en liaison avec la saillie en forme d'entretoise (12.1), constitue une liaison à encliquetage.

8. Chaîne de convoyeur accumulateur à rouleaux selon la revendication 6, **caractérisée en ce que** les perçages de coinçage (12) sont constitués en tant que perçages borgnes et sont pourvus d'une rainure de ventilation (13) axiale.

9. Chaîne de convoyeur accumulateur à rouleaux selon l'une quelconque des revendications 1 à 8, **caractérisée en ce que** les patins de guidage (11) sont pourvus d'un creux (11.1) pour recevoir la plaquette de traction (9) respective accolée.

10. Chaîne de convoyeur accumulateur à rouleaux selon l'une quelconque des revendications 1 à 9, **caractérisée en ce que** les plaquettes latérales (2) d'un bloc à plaquettes (1) sont reliées l'une à l'autre d'un seul tenant au moyen d'une entretoise transversale (301) en forme de bloc et que la surface avant (3.2) de l'entretoise transversale (3.1) dirigée vers le rouleau porteur (10) correspondant entoure le rouleau porteur avec un faible écartement.

11. Chaîne de convoyeur accumulateur à rouleaux selon l'une quelconque des revendications 1 à 10, **caractérisée en ce que** les plaquettes latérales (2) d'un bloc à plaquettes (1) sont pourvues d'un creux (2.1) pour recevoir une plaquette de traction (2.3) de renforcement.
